# EUROPÄISCHE PATENTANMELDUNG

(11) **EP 3 144 842 A1**
(43) Veröffentlichungstag der Anmeldung: **22.03.2017**
(21) Anmeldenummer: 15185275.3
(22) Anmeldetag: 15.09.2015
(51) Int. Cl.: G06F 21/62, H04L 29/06

(54) **SYSTEM UND VERFAHREN ZUR ANALYTIK EINES OBJEKTES**

(71) Anmelder: Siemens Aktiengesellschaft, 80333 München (DE)
(72) Erfinder: Verma, Amit, 91052 Erlangen (DE)

(57) **Zusammenfassung**

Die Erfindung betrifft ein System (100) zur Analytik wenigstens eines Objektes (1a-1d) eines Systembetreibers, wobei dem wenigstens einen Objekt wenigstens eine erste Rechnereinheit (12) des Systembetreibers lokal zugeordnet ist, welche wenigstens erste Datenspeicher (14), eine erste Auswerteeinheit (13) und eine erste Applikation (15) umfasst, wobei die ersten Datenspeicher (14) Daten (22) des Objektes umfassen und die erste Applikation die Auswerteeinheit (15) veranlasst Daten der ersten Datenspeicher zu verarbeiten und die hieraus entstehenden ersten Resultate (24) an die ersten Datenspeicher zur Übermittlung an das Objekt zu übertragen. Das System umfasst einen Agenten (25) und eine zweite Rechnereinheit (17) eines Servicebetreibers, wobei die zweite Rechnereinheit wenigstens zweite Datenspeicher (19), eine zweite Auswerteeinheit (18) und eine zweite Applikation (20) umfassen und der Agent der wenigstens einen ersten Rechnereinheit zugeordnet ist und Daten der ersten Datenspeicher über das Internet (16) an zweite Datenspeicher verbringt und/oder Daten des zweiten Datenspeichers empfängt. Die zweite Applikation veranlasst die zweite Auswerteeinheit Daten der zweiten Datenspeicher zu verarbeiten und die sich hieraus ergebenen zweiten Resultate (27) in die zweiten Datenspeicher zu übertragen. Das System weist ein Sperrmodul (28) auf, welches der ersten Rechnereinheit zugeordnet ist und durch welches der Datenaustausch von Daten zwischen den ersten und den zweiten Datenspeicher in Richtung von den zweiten zu den ersten Datenspeicher sperrbar ist.

## Beschreibung

Die Erfindung betrifft ein System und ein Verfahren zur Analytik von Objekten eines Systembetreibers mittels passiver Datensammler und einem Sperrmodul zur Unterdrückung von Befehlen an die Objekte.

Die vorliegende Erfindung ist im Bereich der Sicherheit von agentenbasierten Datensammlungen für sog. cloudbasierte Systeme und Dienstleistung angesiedelt. Die Erfindung betrifft weiter den Bereich des sogenannten "Internet of Things (IoT) bzw. des sog. "Web of Systems" (WoS). Bei agentenbasierten Datensammlungen stellen diese Agenten die Schnittstelle zwischen der Datenquelle und dem cloudbasierten System dar. Sie sammeln die Daten und senden die Daten zum System. Das Senden der Daten kann direkt, über Vermittler (sog. Proxies) oder über Gateways erfolgen. Die Datenquelle sind Automatisierungs- oder Rechnereinheiten in einem industriellen Automatisierungssystem. Diese können speicherprogrammierbare Steuerungen, Feldgeräte mit Controllern wie Motoren, Umrichter, Sensoren aber auch Controller in Autos, Lichtsignalanlagen, Kameras oder dergleichen sein. Die Agenten können reine Softwareagenten sein, die in diesem Falle direkt in den vorgenannten Steuerungen bzw. Controllern integriert sind und dort als Datensammler fungieren. Alternativ kann der Agent auch auf einer eigenen Hardware laufen, die dann die Datenquelle indirekt über Kommunikationsprotokolle (Siemens S7, Profibus, Modbus, OPC DA/UA, SOAP/XML etc.) verbindet. Hinsichtlich der Anforderungen bei der Kopplung der Datenquelle über Agenten können diese in folgende Typen unterteilt werden.
In einem Fall soll der Agent Daten von der Datenquelle sammeln, an das cloudbasierte System schicken und/oder in der Lage sein Steuersignale vom cloudbasierten System an die Datenquelle zu empfangen. Ein Beispiel eines solchen Datensammel- und Steueragenten könnte ein Agent in einem Motor sein, der in einem einfachen Anwendungsfall Daten, beispielsweise Beschleunigungsdaten, von Sensoren im Motor liest und diese Daten zu Analytikzwecken an das cloudbasierte System sendet. Wenn es sich um einen Motor handelt, der für das industrielle Automatisierungssystem aufgrund seiner Funktion exponiert ist und somit überwacht werden muss, könnte das cloudbasierte System nach Auswertung der Daten eine Anomalität feststellen und ein Stoppbefehl an den Agenten senden, welcher dann wiederum ein entsprechendes Signal für den Stopp des Motors an die Steuerung des Motors sendet.
In einem anderen Fall handelt es sich bei dem Agenten um einen passiven Datensammler, der lediglich Daten sammelt und an das cloudbasierte System sendet, welches mit diesen Daten weitere Analytikfunktionen ausführt. Diese Form von Agenten sollen keine Befehle vom cloudbasierten System empfangen.

Die Einführung solcher datensammelnder Agenten, die sich mit cloudbasierten Systemen verbindenden haben im industriellen Umfeld diverse sicherheitsrelevante Konsequenzen. Die Agenten entblößen das industrielle Automatisierungssystem und die einzelnen Automatisierungs- und Rechnereinheit dem Internet. Selbst ein Agent direkt oder indirekt verbunden mit einer Steuerung im Auto, der mit dem Internet verbunden ist kann bedenklich sein. Somit werden cloudbasierte Systeme, die über das Internet und Agenten mit den Steuerungen verbunden sind von den Kunden als bedrohlich wahrgenommen. Aus diesem Grunde und um die Sicherheitsrisiken zu minimieren werden vorwiegend Agenten zugelassen, die lediglich passive Datensammler sind und nur eine Verbindung zur Cloud (outbound) zulassen. Aber auch solche passiven Agenten werden von Kunden nicht immer als sicher angesehen. So wird befürchtet, dass von außen in passive Agenten eingedrungen werden kann und diese so verändert werden, dass sie dennoch Steuerbefehle zur Automatisierungs- oder Rechnereinheit senden. Es besteht auch das Risiko, dass ein passiver Agent Steuersignale an die Datenquelle sendet aufgrund von Konfiguration- oder Implementierungsfehlern des Agenten. Es wird versucht dem zu begegnen, indem die passiven Agenten derart konfigurierbar sind, dass sie ausschließlich in einem Outbound-Verbindungsmodus arbeiten. Doch auch in diesem Modus ist es unter Umständen möglich Steuerbefehle zur Automatisierungs- oder Rechnereinheit zu senden, nämlich über die Antwortkommunikation auf einen Outbound-Request. Gelingt es passive Agenten mit Schadsoftware zu infizieren, könnten diese darüber veranlasst werden, modifizierte Signale oder Befehle an die Automatisierungs- und Rechnereinheiten zu senden. Abhängig vom konkreten Anwendungsfall könnte es vorkommen, dass ein solche Agent später beispielsweise für Remote Services aus der Cloud aktiviert werden soll, welches dann - wenigstens für eine gewisse Zeit - die Steuerung der Automatisierungs- oder Rechnereinheit bedeuten würde.

Ausgehend von den vorbeschriebenen Problemen ist es demnach Aufgabe der Erfindung ein System und ein Verfahren anzugeben, welches die Sicherheit in den vorgenannten Systemen erhöht. Insbesondere ist es die Aufgaben zu verhindern, dass ein passiver Agent Steuersignale an die Automationseinheit sendet.

Die Aufgabe wird gelöst durch ein System mit den Merkmalen des Anspruchs 1 und ein Verfahren mit den Merkmalen des Anspruchs 11.

Bei dem System zur Analytik wenigstens eines Objektes handelt es sich um die Objekte eines Systembetreibers. Unter Objekten sind in diesem Zusammenhang beispielsweise Automatisierungssysteme in der Fabrikautomation zu verstehen, die aus einer Reihe von unterschiedlichen Automatisierungskomponenten im Wesentlichen in der Steuerungs- und Feldebene wie beispielsweise speicherprogrammierbare Steuerungen bestehen. Unter dem Begriff Objekt sind dabei jede intelligente und mit Software ausgestattete Feld- oder Steuerungskomponente zu verstehen und insoweit sollen auch Antriebs-, Überwachungs- oder Sensorkomponenten, beispielsweise Motoren oder Umrichter vom Begriff umfasst sein. Die Objekte sind in der Regel untereinander vernetzt und werden von verschiedenen, hierarchisch angeordneten, übergeordneten Steuerung bedient und/oder überwacht. Neben den vorbeschriebenen Objekten innerhalb einer Fabrikautomation sollen unter den Begriff aber auch jedwede Objekte zu verstehen sein, die - egal in welchem Umfeld arbeitend - verbunden mit einer Rechnereinheit Steuer- und Überwachungsfunktionen ausführen. Beispielsweise könnten Fahrzeuge (Straßenfahrzeuge, landwirtschaftliche Fahrzeuge oder Schienenfahrzeuge) ein solches Objekt darstellen, aber auch intelligente Geräte im Umfeld der Haussteuerung und - überwachung. Unter Systembetreiber soll derjenige verstanden werden in dessen Eigentum oder Besitz das Objekt fällt oder in dessen unmittelbaren Einflussbereich und mit dessen Daten das Objekt arbeitet.
Dem Objekt ist wenigstens eine erste Rechnereinheit lokal zugeordnet. Üblicherweise wird sich die Rechnereinheit in baulicher Einheit mit dem Objekt befinden. Es ist aber auch denkbar, dass Objekt und seine Rechnereinheit keine bauliche Einheit bilden. Aber auch in einem solchen Fall sollen Rechnereinheit und Objekt sich in räumlicher Nähe zueinander befinden, sich zumindest aber in den Grenzen des Einflussbereiches des Systembetreibers innerhalb eines lokalen Kommunikationsnetzes befinden. Die erste Rechnereinheit weist Datenspeicher, wenigstens eine Auswerteeinheit und wenigstens eine Applikation auf. Die Auswerteeinheit ist als Kombination aus Hardware und Software realisiert. Sie ist als eigenständige Rechnereinheit getrennt von den Datenspeichern ausgestaltet, kann diese aber auch umfassen. Die Datenspeicher umfassen Daten des Objektes. In diesem Zusammenhang sollen unter Datenspeicher auch interne Register oder Datenvariablen verstanden werden. Die Daten der Objekte können interne Objektdaten sein oder auch Daten der Objektperipherie (von Sensoren oder Aktoren für das Objekt). Die Applikation veranlasst die Auswerteeinheit Daten des ersten Datenspeichers zu verarbeiten und die sich hieraus ergebenen Resultate an die Datenspeicher zur Übermittlung - insbesondere als Steuersignale - an das Objekt oder an eine übergeordnete Steuerung zu übertragen. Das System umfasst wenigstens ein Agenten und eine zweite Rechnereinheit. Die zweite Rechnereinheit befindet sich entfernt von der ersten Rechnereinheit und im Eigentum, Besitz oder Einflussbereich eines Servicebetreibers. Hierbei handelt es sich um eine cloudbasierte Rechnereinheit. Die zweite Rechnereinheit umfasst zweite Datenspeicher, eine zweite Auswerteeinheit und wenigstens eine zweite Applikation. Der Agent ist der ersten Rechnereinheit zugeordnet. Darunter soll verstanden werden, dass der Agent entweder als reiner Softwareagent direkt auf der Hardware der ersten Rechnereinheit installiert ist und insoweit auch die Auswerteeinheit dieser Rechnereinheit nutzt, oder dass der Agent auf eigener Hardware softwaremäßig implementiert ist und eine eigene Kommunikationsverbindung innerhalb des lokalen Kommunikationsnetzes zur Rechnereinheit des Objektes unterhält. Der Agent übermittelt Daten von ersten Datenspeichern über das Internet zu zweiten Datenspeichern. Dabei kann der Agent auf die ersten Datenspeicher lesend zugreifen. Alternativ kann der Agent auch Daten sammeln, bevor diese in erste Datenspeicher abgelegt werden. Die zweite Applikation veranlasst die zweite Auswerteeinheit Daten der zweiten Datenspeicher zu verarbeiten und die sich hieraus ergebenen zweiten Resultate an die zweiten Datenspeicher zu übertragen. In dieser Form ist auch die zweite Auswerteeinheit als eigenständige Rechnereinheit getrennt von den zweiten Datenspeichern ausgestaltet.
Um zu verhindern, dass ungewollt Steuerbefehle für das Objekt von der zweiten Rechnereinheit an die erste Rechnereinheit Aktionen des Objektes ausführen oder aber Daten in den ersten Datenspeichern manipulieren werden, wird ein Sperrmodul ("CIL" - Control Inhibition Layer) implementiert, welches die Übertragung von Daten zwischen ersten und zweiten Datenspeichern in Richtung vom zweiten zum ersten Datenspeicher blockiert. Das Sperrmodul erlaubt lediglich Lesezugriffe des Agenten auf die ersten Datenspeicher. Es unterdrückt alle Modify/Write/Control Befehle des Agenten auf die ersten Datenspeicher bzw. zur Auswerteeinheit der ersten Rechnereinheit des Objektes. Funktionsorganisatorisch befindet sich das Sperrmodul oder die Sperrschicht zwischen der ersten Rechnereinheit und dem Agenten. Das Sperrmodul nimmt die Rolle eines Außenstehenden ein, ähnlich eines Antivirusprogrammes oder einer Firewall, und kontrolliert dabei die Kommunikation des Agenten mit den ersten Datenspeichern der Rechnereinheit, indem es sich als Sperrschicht zwischen diese Kommunikation legt. Wenn immer eine Kommunikation zwischen Agenten und ersten Datenspeichern stattfindet, wird das Sperrmodul die Entscheidung treffen, diese Kommunikation zu erlauben oder zu blocken. Sofern ein Schreibversuch in einen ersten Datenspeicher vom Agenten unternommen wird, wird dieser blockiert.

Nach einem weiteren Aspekt kann das Sperrmodul zusätzlich auch den Austausch von Daten zwischen dem ersten und zweiten Datenspeicher in Richtung vom ersten zum zweiten Datenspeicher sperren. Dies kann im wesentlich dann von Vorteil sein, wenn vom Systembetreiber gewünscht ist den Datenverkehr in die cloudbasierte Rechnereinheit vollständig oder für eine bestimmte Zeit sicher zu unterbinden. In diesem Fall werden Leseversuche des Agenten aus den ersten Datenspeichern unterdrückt.

Besonders vorteilhaft weist das Sperrmodul nur einen Zugang für den Systembetreiber auf, über den ein Regeleditor konfigurierbar ist. Darüber ist der Systembetreiber in der Lage Regeln zu definieren, die bis auf die Datumsebene Festlegungen treffen können. Beispielsweise könnten für bestimmte Kategorien von Daten, die keine Eingriffe auf die Objekte und somit nicht für die Prozesssteuerung relevant sind, Schreibzugriffe zugelassen sein. In einer komplexeren Ausgestaltung erhält das Sperrmodul Konfigurationsregeln, die beispielsweise festlegen, welche Kategorie von Steuerbefehlen gesperrt werden sollen. So können beispielsweise Solltemperaturvorgaben für einen Hochofen blockiert sein, während Solltemperaturvorgaben für einen Wärmebehandlungsprozess in einem Bereich von plus/minus 5 Grad erlaubt sein können. Nach einer anderen Konfigurationsregel könnte beispielsweise festgelegt sein, welche Kategorie von Daten passiv von der Datenquelle gelesen werden kann und welche nicht. So wäre es denkbar, dass der Systembetreiber über den Regeleditor festlegt, dass der Agent keine KPI (key performance indicator) hinsichtlich der Produktion lesen darf, weil diese für den Systembetreiber sensible Daten darstellen, die er nicht in einer anlagenexterne Rechnereinheit gespeichert wünscht.

Zur Erhöhung der Transparenz und aus Berichtsgründen kann in einer weiteren Variante das Sperrmodul auch Statistiken darüber unterhalten, wie viele Kommunikationsanfragen behandelt, gesperrt oder freigegeben worden sind.

In einer Ausführungsvariante ist das Sperrmodul als separates Softwaremodul in einer eigenständigen Applikation (e.g. cil.exe) der ersten Rechnereinheit implementiert. Es benutzt auf diese Weise die Auswerteeinheit (CPU) der ersten Rechnereinheit, wie es beispielsweise auch die Applikation für den Agenten (e.g. agent.exe). Während der Agent normalerweise komplex und insoweit auch eine größere Anzahl von Kommunikationsbibliotheken oder auch Softwaremodule von Drittanbietern (Open SSL) benutzt und insofern einem höheren Risiko ausgesetzt ist angreifbar zu sein, hat das Sperrmodul - verglichen mit dem Agenten - nur eine sehr spezifische und relativ einfache Funktion. Es ist designt und programmiert mit einem höheren Sicherheitsstandard, beispielsweise strengere Speicherschutzmechanismen, strengere Fehlerüberwachung u.s.w. und/oder verwendet nur eine kleine Anzahl von Bibliotheken, was die potentielle Angriffsfläche erheblich reduziert. Dem typischer Weise auftretenden Konflikt zwischen Sicherheit auf der einen und Leistungsfähigkeit bzw. Benutzbarkeit auf der anderen Seite kann auf diese Weise Rechnung getragen werden. Über das Sperrmodul kann ein höherer Sicherheitsstandard durchgesetzt werden, wie er praktischer Weise mit dem Agent (wegen notwendiger Leistungsfähigkeit und Einbindung von Open Source Software) nicht möglich ist.

In einer weiteren Variante ist das Sperrmodul in Form eines Service Prozesses implementiert und vom Agenten mittels einer Kommunikationsanfrage aufrufbar. Nachdem der Agent eine Kommunikationsanfrage für die Datenspeicher formuliert hat, erhält zunächst das Sperrmodul diese Kommunikationsanfrage vom Agenten verbunden mit der Aufforderung zur Freigabe dieser Kommunikation. Erteilt das Sperrmodul diese Freigabe nicht, so verwirft der Agent die Kommunikationsanfrage wieder, im Falle der aktiven Freigabe kann der Agent die Kommunikation aufnehmen. In dieser Variante liefert das Sperrmodul nur die Entscheidung, die Kommunikation selbst bleibt in der Verantwortung des Agenten.

In einer anderen Variante weist die erste Rechnereinheit eine Applikation zur Verwaltung der ersten Datenspeicher auf. Das Sperrmodul ist nach Stellung einer Kommunikationsanfrage durch den Agenten von der Applikation zur Verwaltung der ersten Datenspeicher aufrufbar. Erteilt das Sperrmodul diese Freigabe nicht, so verwirft das Verwaltungsprogramm die Kommunikationsanfrage wieder, im Falle der aktiven Freigabe durch das Sperrmodul wird der Zugriff auf die Datenquelle erlaubt. Wie in der vorhergehenden Variante liefert das Sperrmodul auch hier nur die Entscheidung, die Kommunikation selbst bleibt in der Verantwortung von Agenten und Datenquelle.

Nach einem weiteren Aspekt ist das Sperrmodul auf eigener Hardware implementiert ist. Dies ist insbesondere dann von Vorteil, wenn auch der Agent in einer eigenen Hardware implementiert ist. In dieser Variante wird das Sperrmodul in das anlagenseitige Kommunikationsnetzwerk eingebunden und liest die Kommunikation auf dem Netzwerk. Für alle TCP/IP basierten Kommunikationsprotokolle (z.B. Profinet, Modbus, TCP/IP) kann das Sperrmodul die Kommunikation zu den Datenspeichern blockieren. Auf diese Weise können vorteilhaft die vorbeschriebenen Freigabe- oder Sperrentscheidungen durch ein einziges Sperrmodul auch für mehrere erste Rechnereinheiten durchgeführt werden.

In einer weiteren Variante weist das Sperrmodul ein Vermittlermodul auf, welches in die Laufzeitbibliothek der Kommunikationsprotokolle Vermittlerfunktionen injiziert, die das Sperrmodul über Kommunikationsanfragen benachrichtigen. Das Vermittlermodul ist eine Softwareprozedur, die über die existierenden Bibliotheksschnittstellen auf die Bibliotheken zugreifen und den Code der Bibliotheken dahingehend verändern, dass diese Kommunikationsanfragen des Agenten an das Sperrmodul senden. Das Sperrmodul kann diese Kommunikationsanfragen blockieren oder freigeben und somit vorteilhaft Steuerbefehle in Richtung der ersten Rechnereinheit unterdrücken.

Ein Ausführungsbeispiel der Erfindung wird nachfolgend anhand der Figuren beschrieben. Darin zeigen in schematischer Darstellung:
Fig. 1 ein System bestehend aus mehreren Rechnereinheiten zur Analytik von Objekten in einer cloudbasierten Rechnereinheit
Fig. 2 die Funktion von Agenten und Sperrmodul

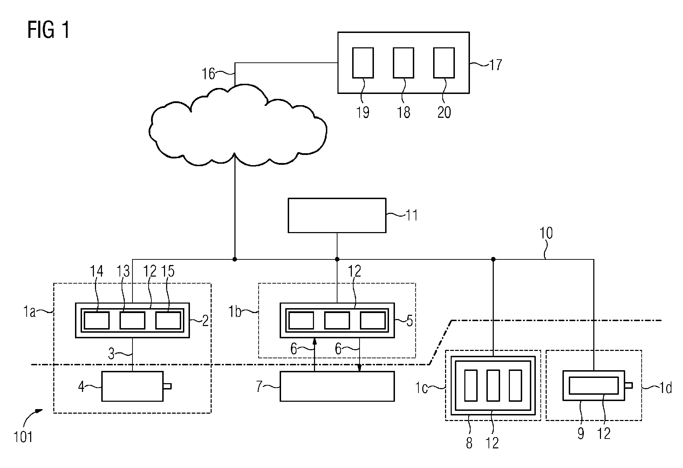

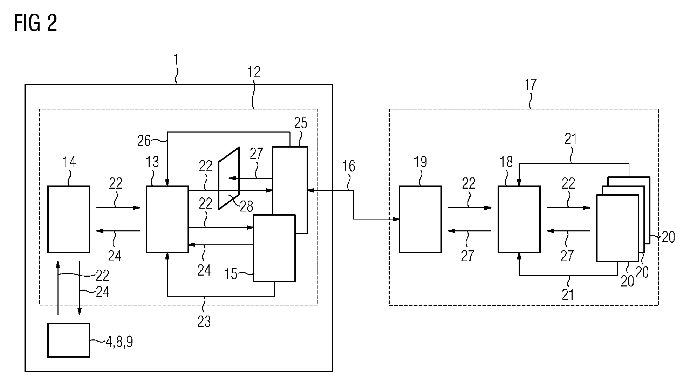

Fig. 1 zeigt ein System 100 zur Analytik von Objekten 1a bis 1d. Bei den Objekten handelt es sich um Automatisierungskomponenten in der Steuerungs- und Feldebene, wie sie beispielsweise in der Fabrikautomation bekannt sind. Das Objekt 1a zeigt einen von einem Umrichter 2 über die Steuerleitungen 3 angesteuerten Motor 4. Das Objekt 1b eine speicherprogrammierbare Steuerung 5, die in herkömmlicher Weise über digitale/analoge Ein-/Ausgänge 6 mit einer Prozessperipherie 7 verbunden ist. In einer weiteren Variante zeigt Objekt 1c ein intelligentes Feldgerät 8 und Objekt 1d einen intelligenten, direkt gesteuerten Motor 9. Die Objekte sind über ein lokales Kommunikationsnetzwerk 10 und in diesem Beispiel mit einer Steuerung 11 verbunden, welche übergeordnete Steuerungs- und Überwachungsfunktionen ausführt. Die Objekte 1a bis 1d liefern Objektdaten 22, das sind sowohl interne Objektdaten (gebildet, berechnet innerhalb des Objektes) sowie externe Objektdaten (Zustandsdaten aus der Prozessebene 101). Den Objekten sind Rechnereinheiten 12 zugeordnet, die die Verarbeitung der Objektdaten vornehmen, die Objekte überwachen, steuern oder regeln. Die Rechnereinheiten 12 sind dazu mit wenigstens einer Auswerteeinheit 13, Datenspeichern 14 und Applikationen 15 versehen. Über die Datenverbindung 16 sind Recheneinheiten 12 der Objekte mit einer anlagenexternen Rechnereinheit 17 verbunden und tauschen mit dieser Daten aus. Die Datenverbindung 16 wird bevorzugt über das Internet realisiert. Objekte, wie in Fig. 1 gezeigt, sind vom gleichen Systembetreiber, es können aber auch unterschiedliche Systembetreiber über das Internet mit der Rechnereinheit 17 verbunden sein und Objektdaten an diese senden. Die Rechnereinheit 17 weist eine Auswerteeinheit 18 und Datenspeicher 19 auf. Applikationen 20 wickeln die Verarbeitung der Objektdaten unter Zuhilfenahme von Auswerteeinrichtung 18 und Datenspeichern 19 ab. Die Applikationen 20 können komplexere Steuerung- und Regelungsfunktionen abbilden (beispielsweise in Simulationen), oder Analytiken, Historienuntersuchungen, Condition Monitoring etc. ausführen.
Ein Agent 25 - dessen Funktion in Fig. 2 näher beschrieben ist, wird als Datensammler eingesetzt und sammelt und überträgt die Objektdaten 22 an die Rechnereinheit 17.

Fig. 2 zeigt schematisch das Handling der Daten in den Rechnereinheiten 12 und 17. Dabei sind dem Datenspeicher 14 Objektdaten 22 vom Objekt 1 als Datenquelle zugegangen. Diese Daten können jedwede interne Objektdaten sein, wie beispielsweise Ströme oder Spannungen eines angeschlossenen Motors oder Zwischenkreisspannungen, oder -ströme des den Motor betreibenden Umrichters, intern für die Objekte berechnete Sollwertgrößen (insoweit auch Resultate 24). Diese Daten können aber auch Sensordaten externer Sensoren oder Aktoren bezüglich des Objektes und/oder des vom Objekt gesteuerten und/oder überwachten Prozesses sein. Je nach Ausführungsform können die Objektdaten kontinuierlich, periodisch, zeitgesteuert oder ereignisgesteuert an den Datenspeicher 14 übertragen werden. Der Datenspeicher 14 wechselwirkt mit der Auswerteeinheit 13. Die Auswerteeinheit 13 hat Zugriff auf den Datenspeicher 14 und kann von diesem Daten 22 anfordern bzw. abrufen. Die Auswerteeinheit 13 kann als Kombination aus Hardware und Software realisiert sein. In der hier beschriebenen Variante ist die Auswerteeinheit als eigenständige Rechnereinheit getrennt von den Datenspeichern 14 ausgestaltet. Über die Auswerteeinheit 13 werden Anfragen von verschiedenen Anwendungen bzw. Applikationen 15 verarbeitet. Die Applikationen 15 stellen dabei ein auf der Rechnereinheit 12 aufgeführtes Programm dar. Eine Applikation 15 veranlasst die Auswerteeinheit 13 Daten 22 des Datenspeichers 14 gemäß der in der Applikation 15 hinterlegten Anweisung 23 zu verarbeiten und die Resultate 24 dieser Verarbeitung an den Datenspeicher 14 zur Übermittlung an das Objekt 1 zu übertragen. Objekt 1 kann mittels dieser Resultate gesteuert bzw. beeinflusst werden. Ein Agent 25 eines Servicebetreibers, der gemäß Fig. 2 als lauffähige Applikation innerhalb der Rechnereinheit 12 abläuft, veranlasst über Anweisungen 26 die Auswerteeinheit 13 die Objektdaten 22, 24 des Datenspeichers 14 über die Datenverbindung 16 an die anlagenexterne Rechnereinheit 17 zu verbringen. Die Rechnereinheit 17 weist Datenspeicher 19, eine Auswerteeinheit 18 und Applikationen 20 auf. Die Recheneinheit 17 kann Applikationen verschiedener Servicebetreiber umfassen. Die Applikation 20 weist die Auswerteeinheit 18 an Daten 22 des Datenspeichers 19 gemäß der in der Applikation 20 hinterlegten Anweisung 21 zu verarbeiten und die Resultate 27 im Datenspeicher 19 abzulegen. Über den Agenten 25 und die Datenverbindung 16 können Daten der Datenspeicher 19 an die Recheneinheit 12 gelangen. In der Fig. 2 ist schematisch dargestellt, wie der Agent 25 über Daten hinsichtlich der Resultate 27 verfügt. Um zu verhindern, dass vom Agenten ungewünscht Steuerungsfunktionen an den Objekten ausgeführt werden (hier beispielhaft auf Basis der Resultate 27 der Applikation 20), ist ein Sperrmodul 28 vorgesehen, welches Schreibzugriffe auf den Datenspeicher 14 unterdrückt. Dies ausdrücklich auch dann, wenn die Anweisung 26 der Agentenapplikation 25 die Auswerteeinrichtung 13 veranlassen sollte Resultate 27 an den Datenspeicher 14 zur Übermittlung an das Objekt 1 zu übertragen. Das Sperrmodul 28 läuft hier als separater Prozess auf der gleichen Auswerteeinheit.

## Patentansprüche

1. System (100) zur Analytik wenigstens eines Objektes (1a-1d) eines Systembetreibers, wobei dem wenigstens einen Objekt wenigstens eine erste Rechnereinheit (12) des Systembetreibers lokal zugeordnet ist, welche wenigstens erste Datenspeicher (14), eine erste Auswerteeinheit (13) und eine erste Applikation (15) umfasst, wobei die ersten Datenspeicher (14) Daten (22) des Objektes umfassen und die erste Applikation die Auswerteeinheit (15) veranlasst Daten der ersten Datenspeicher zu verarbeiten und die hieraus entstehenden ersten Resultate (24) an die ersten Datenspeicher zur Übermittlung an das Objekt zu übertragen, wobei das System einen Agenten (25) und eine zweite Rechnereinheit (17) eines Servicebetreibers umfassen, wobei die zweite Rechnereinheit wenigstens zweite Datenspeicher (19), eine zweite Auswerteeinheit (18) und eine zweite Applikation (20) umfassen, wobei der Agent der wenigstens einen ersten Rechnereinheit zugeordnet ist und Daten der ersten Datenspeicher über das Internet (16) an zweite Datenspeicher (19) verbringt und/oder Daten des zweiten Datenspeichers empfängt, wobei die zweite Applikation die zweite Auswerteeinheit veranlasst Daten (22, 24) der zweiten Datenspeicher zu verarbeiten und die sich hieraus ergebenen zweiten Resultate (27) in die zweiten Datenspeicher zu übertragen, **dadurch gekennzeichnet, dass** das System ein Sperrmodul (28) aufweist, welches der ersten Rechnereinheit zugeordnet ist und durch welches der Datenaustausch von Daten zwischen den ersten und den zweiten Datenspeicher in Richtung von den zweiten zu den ersten Datenspeicher sperrbar ist.

2. System nach Anspruch 1 **dadurch gekennzeichnet, dass** auch der Datenaustausch von Daten zwischen dem ersten und zweiten Datenspeicher in Richtung vom ersten zum zweiten Datenspeicher sperrbar ist.

3. System nach Anspruch 1 oder 2 **dadurch gekennzeichnet, dass** das Sperrmodul durch den Systembetreiber über einen Regeleditor konfigurierbar ist.

4. System nach einem der Ansprüche 1 bis 3 **dadurch gekennzeichnet, dass** das Sperrmodul als separates Softwaremodul in einer weiteren Applikation der ersten Rechnereinheit implementiert ist.

5. System nach Anspruch 4 **dadurch gekennzeichnet, dass** das Sperrmodul vom Agenten mittels einer Kommunikationsanfrage aufrufbar ist.

6. System nach Anspruch 4, **dadurch gekennzeichnet, dass** die wenigstens erste Rechnereinheit eine Applikation zur Verwaltung der ersten Datenspeicher aufweist und das Sperrmodul nach Stellung einer Kommunikationsanfrage durch den Agenten von dieser Applikation aufrufbar ist.

7. System nach Anspruch 1 oder 2 **dadurch gekennzeichnet, dass** das Sperrmodul auf eigener Hardware implementiert ist.

8. System nach einem der Ansprüche 4 bis 6 **dadurch gekennzeichnet, dass** Sperrmodul als Softwaremodul im Agenten implementiert ist.

9. System nach einem der vorhergehenden Ansprüche **dadurch gekennzeichnet, dass** das Sperrmodul alle Anforderungen zu Netzwerk-, Datei- oder Speicheroperationen des Betriebssystems blockiert.

10. System nach einem der vorhergehenden Ansprüche **dadurch gekennzeichnet, dass** das Sperrmodul ein Vermittlermodul aufweist, welche in die Laufzeitbibliotheken der Kommunikationsprotokolle Vermittlerfunktionen injiziert, die das Sperrmodul zu Kommunikationsanfragen benachrichtigen.

11. Verfahren zur rechnergestützten Verarbeitung von Daten zur Analytik wenigstens eines Objektes (1a-1d) eines Systembetreibers, wobei dem wenigstens einen Objekt wenigstens eine erste Rechnereinheit (12) des Systembetreibers lokal zugeordnet ist und diese mit einer zweiten Rechnereinheit (17) eines Servicebetreibers über das Internet (16) verbunden ist, bei dem
a) innerhalb der ersten Rechnereinheit eine erste Applikation (15) Daten (22) eines ersten Datenspeichers (14) vom Objekt an eine erste Auswerteeinheit (13) sendet
b) die erste Auswerteeinheit (13) diese Daten verarbeitet und die hieraus ergebenen ersten Resultate (24) an die erste Applikation (15) zum Eintrag in den ersten Datenspeicher (14) zur Übermittlung an das Objekt überträgt
c) ein Agent (25) zugeordnet der ersten Rechnereinheit (12) die Daten (22, 24) des ersten Datenspeichers (14) über das Internet (16) an zweite Datenspeicher (19) verbringt und/oder Daten des zweiten Datenspeichers (19) empfängt
d) nnerhalb der zweiten Rechnereinheit (17) eine zweite Applikation (20) Daten des zweiten Datenspeichers (19) an eine zweite Auswerteeinheit (18) sendet
e) die zweite Auswerteeinheit (18) diese Daten verarbeitet und die hieraus ergebenen zweiten Resultate (27) an die zweite Applikation zum Eintrag in den zweiten Datenspeicher (19) überträgt
f) ein Sperrmodul (28) zugeordnet der ersten Rechnereinheit (12) den Datenaustausch zwischen erstem und zweitem Datenspeicher in Richtung vom zweiten zum ersten Datenspeicher sperrt.

12. Verfahren nach Anspruch 9 **gekennzeichnet durch** das Sperren des Datenaustauschs zwischen erstem und zweitem Datenspeicher in Richtung vom ersten zum zweiten Datenspeicher.

13. Verfahren nach Anspruch 11 oder 12 mit den Schritten:
a) Formulieren einer Kommunikationsanfrage durch den Agenten
b) Übertragen der Kommunikationsanfrage an das Sperrmodul
c) Auswerten der Kommunikationsanfrage durch das Sperrmodul auf Basis der im Sperrmodul hinterlegten Logik
d) Entscheiden über die Kommunikationsanfrage im Sperrmodul
e) Übertragen der Entscheidung an den Agenten
f) Verwerfen oder Ausführen der Kommunikationsanfrage durch den Agenten in Abhängigkeit der Entscheidung des Sperrmoduls.

14. Verfahren nach Anspruch 11 oder 12, wobei die erste Rechnereinheit eine Applikation zur Verwaltung der ersten Datenspeicher aufweist mit den Schritten:
a) Formulierung einer Kommunikationsanfrage durch den Agenten
b) Übertragen der Kommunikationsanfrage an die Verwaltungsapplikation
c) Übertragen der Kommunikationsanfrage von der Verwaltungsapplikation an das Sperrmodul
d) Auswerten der Kommunikationsanfrage durch das Sperrmodul auf Basis der im Sperrmodul hinterlegten Logik
e) Entscheiden über die Kommunikationsanfrage im Sperrmodul
f) Übertragen der Entscheidung an die Verwaltungsapplikation
g) Sperren oder Freigeben der Kommunikationsanfrage des Agenten durch die Verwaltungsapplikation.
